# EUROPEAN PATENT SPECIFICATION

(11) **EP 3 583 171 B1**
(45) Date of publication and mention of the grant of the patent: **06.07.2022**
(21) Application number: 18706702.0
(22) Date of filing: 16.02.2018
(51) Int. Cl.: C09D 11/03, C09D 11/033, C09D 11/037, C09D 11/107

(54) **FLEXOGRAPHIC PRINTING INK**
FLEXODRUCKFARBE
ENCRE D'IMPRESSION FLEXOGRAPHIQUE

(30) Priority: 16.02.2017 ES 201730191
(43) Date of publication of application: 25.12.2019
(73) Proprietor: Kao Corporation, Chuo-Ku Tokyo 103-8210 (JP)
(72) Inventor: MARCÉ TORRA, Armand, 08191 Rubi (ES); FERNÀNDEZ GARCIA, Emilio, 08191 Rubi (ES); MORENO RAMIREZ, Benjamin, 08191 Rubi (ES)
(74) Representative: Hoffmann Eitle
(86) International application number: PCT/EP2018/053933
(87) International publication number: WO 2018/149990

(56) References cited:
- WO-A1-99/27023
- WO-A1-2016/202654
- US-A- 5 098 478
- US-A1- 2013 289 137
- Barna Szabo: "5 Applications for Printing Inks" In: Dieter Urban and Koichi Takamura (Editors): "Polymer Dispersions and Their Industrial Applications.", 31 December 2002 (2002-12-31), Wiley-VCH Verlag GmbH & Co. KGaA, XP002779667, ISBN: 3-527-30286-7 pages 103-122, 5.2 Ink Composition; tables 5-2

## Description

A flexographic printing ink comprising between 1% and 40% by weight of pigments with respect to the total, between 11.5% and 39% by weight of acrylic resins with respect to the total, between 32% and 52% by weight of water with respect to the total, between 0.01% and 0.025% by weight of biocides with respect to the total, between 0.5% and 10% by weight of surfactant with respect to the total, between 0.1% and 1 % by weight of antifoaming agent with respect to the total, and between 1 % and 8% by weight of organic solvents with respect to the total, wherein the organic solvent is a water-miscible solvent selected from monohydric C1-C4 alcohols and glycol ethers.

### BACKGROUND OF THE INVENTION

Different patent documents relating to water-based flexographic printing inks are known in the state of the art.

Laid open European Patent No. 0754729 (ES2136350) entitled "WATER-BASED PRINTING INK" filed in 1996 by Sun Chemical Corporation is known in this sense, which patent relates to a water-based oxidizing printing ink comprising: (a) a resin; (b) an organic and/or inorganic pigment; (c) a drier; and (d) a cyclodextrin.

European Patent No. 0543385 (ES2067997) entitled "WATER-BASED PRINTING INK" filed in 1992 by Uta Melzer is also known is also known, which patent relates to a water-based printing ink which is particularly suitable for gold and silver inks and has the following composition: from 1 to 60 parts by weight of styrene-methacrylate ester copolymer and/or C₁-C₄ methacrylate ester, as an aqueous dispersion, from 1 to 40 parts by weight of styrene-methacrylate ester copolymer and/or vinylpropionate/vinylpyrrolidone copolymers and/or C₁-C₄ methacrylate ester, as neutralizable water-soluble solid resins, from 0 to 60 parts by weight of glycols or alcohols or glycol ether/glycol ether ester, from 0.1 to 30 parts by weight of wetting agents, from 0.1 to 30 parts by weight of neutralizers, from 0.1 to 30 parts by weight of natural and/or synthetic waxes, from 0.001 to 2 parts by weight of antifoaming agents, from 0 to 80 parts by weight of water, and from 1 to 60 parts by weight of aluminum pigments, mica pigments and/or gold bronze pigments. The ink is suitable for printing on paper, board, boxboard and the like, for example by means of the inking system of a sheet-fed or rotary offset machine, with damping systems, separate coating units of sheet-fed or rotary offset printing machines, sheet coating machines, rotogravure (intaglio) or flexographic printing machines. It can be applied in a single operation without subsequent coating.

### BRIEF DESCRIPTION OF THE INVENTION

The present invention is comprised within the sector of flexographic printing inks, specifically inks using water in their formulation.

The closest document is European Patent No. 0754729 (ES2136350).

A water-based flexographic printing ink is described in said document.

Said patent document solves the problem of obtaining a flexographic printing ink that dries quickly and at the same time does not destabilize the ink.

The problem of said patent document is that it uses in its formulation epoxy ester resins, which increases the cost of the ink and entails greater difficulty when working same.

The present invention improves the closest document with a formulation in which it comprises, among other differences, the use of an acrylic resin.

The use of an acrylic resin entails a clear cost reduction and greater handling ease.

At the same time, the combination with the rest of the components makes a drier like the one in the closest document unnecessary, where only drying by means of water evaporation is required.

An object of the present invention relates to a flexographic printing ink characterized in that it comprises: between 1% and 40% by weight of pigments with respect to the total, between 11.5% and 39% by weight of acrylic resins with respect to the total, between 32% and 52% by weight of water with respect to the total, between 0.01% and 0.025% by weight of biocides with respect to the total, between 0.5% and 10% by weight of surfactant with respect to the total, between 0.1% and 1 % by weight of antifoaming agent with respect to the total, and between 1 % and 8% by weight of organic solvents with respect to the total, wherein the organic solvent is a water-miscible solvent selected from monohydric C1-C4 alcohols and glycol ethers.

### SPECIFIC EMBODIMENT OF THE PRESENT INVENTION

It must first be indicated that both in the description and claims percentages are given by weight with respect to the total.

Therefore, the flexographic printing ink comprises in its formulation between 1% and 40% by weight of pigments with respect to the total, defining the color of the ink.

The pigment is not specifically limited and may be an inorganic pigment or an organic pigment. Examples for the inorganic pigment include carbon black, metal oxides or and metal sulfides. Examples of the organic pigments include azo pigments, diazo pigments, phthalocyanine pigments, quinacridone pigments, isoindolinone pigments, dioxazine pigments, perylene pigments, perinone pigments, thioindigo pigments, anthraquinone pigments and quinophthalone pigments. Specific examples of the pigment include:
- Copper phthalocyanine beta blue pigment (PB 15:3), commercially available as MAZCOL BLUE 153 - Beta Blue, Simperm blue AE, AZUL CHROMOFINE KW-5130, Phthalo Blue(NCβ-Form)15:3, Lonocyanine Beta Blue GS 212, Meghafast Blue BD 909 KN, Meghafast Blue BD 909 BMR or 5093 Phthalo Blue 15:3;
- Copper perchlorophthalocyanine pigment (PG 7), commercially avaliable as Simperm green G, Lonocyanine Green 3G-220, Meghafast Green GN 787, Meghafast Green 702 NC, S-2020 Phthalo Green 7 or 3320 Phthalo Green 7;
- Quino2,3-bacridine-7,14-dione, 5,12-dihydro-2,9-dimethyl-Pigment (PR 122), commercially available as Lonacridone Pink, Lysopac Red 2231C, Fast Pink E, Kanoco 31220 Pink E, 1222 Quinacridone Magenta 122, 1225 Quinacridone Magenta 122 or Simperm red AAB;
- Titanium dioxide (PW 6), commercially available as Kronos 2064, KEMIRA RDI-S, Kronos 2066, Lomon R-996, LomonL R-982, Tronox CR 828 or Ti-Pure^{™} R-960;
- 2-Naphthalenecarboxamide (PR 2), commercially available as 4-[2-(2,5-dichlorophenyl)diazenyl]-3-hydroxy-N-phenyl; Naphtol Red G 0236C, Kanoco 30200 Red FRR, Fast Red F2R, Red Sudacolor 312 or Simperm Red 2 TRS;
- 9,19-Dichloro-5,15-diethyl-5,15-dihydrodiindolo[2,3-c:2',3'-n]triphenodioxazine (PV 23), commercially available as Simperm violet BC, Lysopac Violet 2341C, 1233 Carbazole Violet 23, Permanent Violet RL or Kanoco 62300 Violet RL;
- 2,2'-[(3,3'-Dichloro[1,1'-biphenyl]-4,4'-diyl)bis(azo)]bis[N-(2-methylphenyl)-3-oxobutyramide] (PY 14), commercially available as 1214 Diarylide Yellow 14, Fast yellow 2GS, Diacetanil Yellow AAOT 1414C, Diarylide Yellow 14: TCY01404A, PERMAYELLOW 14 W-D; and
- 3-Hydroxy-4-[(4-methyl-2-sulfophenyl)azo]-2-naphthoic acid calcium salt (PR 57:1), commercially available as Fast Rubine Red BK-W, Fast Rubine Red A6B, PR-205 Lithol Rubine 57:1 or Kanoco 35710 Rubine 4BD.

Said ink also comprises between 11.5% and 39% by weight of acrylic resins with respect to the total, reducing costs in relation to the closest document and making the handling thereof easier. Likewise, one of the advantages of using acrylic resins is that water can be used as a solvent, where water is an environmentally friendly ecological solvent.

The acrylic resin is not specifically limited. Preferably, a soft, film forming acrylic copolymer emulsion with a weight average molecular weight of preferably 200,000 or higher and an acid number of preferably between 60 and 120 on solids is used. Commercially available examples include Joncryl 8050, Joncryl 8052, Joncryl 2651 Eurocryl 4120, Eurocryl 4112, Induprint SE 255, Lucidene 631, Induprint 2954, Indprint 2942 and Neocryl A-1120.

Since it is a water-based ink, said ink comprises between 32% and 52% by weight of water as a solvent with respect to the total.

Finally, said ink comprises the following in small amounts:
- between 0.01% and 0.025% by weight of biocides with respect to the total, preventing the proliferation of microorganisms in the ink,
- between 0.5% and 10% by weight of surfactants with respect to the total, to make it easier to wet the pigment and the support to be printed,
- between 0.1% and 1% by weight of antifoaming agent with respect to the total, preventing the formation of bubbles or foam in the ink.

Conventional types of biocides, surfactants and antifoaming agent, as commonly used in the field of the present invention, can be employed for this purpose.

The surfactant preferably is a non-ionic surfactant such as a polyalkylene oxide adduct of an alcohol or a diol ethoxylate in particular. The alcohol may be a saturated or unsaturated alcohol with 8-18 carbon atoms, which may be linear or branched and may have one to three hydroxy groups. Specific examples thereof include fatty alcohols such as decyl alcohol or lauryl alcohol, acetylene diols such as 2,4,7,9-tetramethyl-5-decyn-4,7-diol, and alkylphenols such as octyl- or nonyl phenol. The alkylene oxide may be propylene oxide or ethylene oxide. Polysorbate-based nonionic surfactants derived from ethoxylated sorbitan esterified with C12-C18-fatty acids can be used as well. Specific examples of the surfactant include DYN WET 800, DYNOL 810, ECOSURF EH-3, Surfynol^{®} 465, Surfynol 485, Hydropalat WE^{®} 3197 or Hydropalat^{®} WE 3694.

The antifoaming agent is not specifically limited and can be of any type conventionally employed in the technical field of the invention. Vegetal oils may be used. Commercially available examples of useable antifoaming agents include fluxair 85, cliqsmart 111, Accepta 2906, Foam Blast 1234, KFO^{™} 1204A, Airase 4500 Defoamer and Airase 4750V.

Examples for the biocide include 2-methyl-4-isothiazolin-3-one, isothiazol-3-one, Mergal 758, Mergal MB 25, acticide MBS, Proxel MB, Nipacide BSM, Nicpacide BSM2, Rocima MB2X, Rocima MBX, Proxel GLX, Proxel XL2 or Proxel BC.

Additionally, between 1% and 15% by weight of polyurethane resins with respect to the total can be added to increase internal cohesion of the ink film.

The urethane resin may, e.g., be an aliphatic polyurethane dispersion or an aliphatic polyurethane/acrylic copolymer dispersion, preferably an aqueous dispersion. Commercially available examples include Neopac E-200, Joncryl 5201, Melio Promul 95, Esacote PU 850 and MORCHEM TPU WB/7.

The ink comprises between 1% and 8% by weight of organic solvents with respect to the total to adjust the drying of the ink to the printing speed. The organic solvent is water-miscible and is selected from monohydric C1-C4 alcohols, or glycol ethers. As specific instances, ethanol, isopropanol, dowanol PM, Dowanol DPM or Eastman(TM) PM Solvent can be mentioned.

Finally, the possibility of using between 0.1% and 3% by weight of polyethylene wax with respect to the total to reduce slip coefficients has been envisaged. Commercial polyethylene wax dispersions can be used, such as liquitron 659, Liquitron 461, LUBA-PRINT W5700, Luba-print W3530, Safiwax 349, Policyr PW 153/2, Aquacer 531, CERA AW 8460, Hydrocer 357, Joncryl Wax 4, DEUREX^{®} E 0908W, DEUREX^{®} EO 4508 W, Ultralube MD 2003 or Ultralube MD 2000.

A series of examples of an ink formulation are indicated below:

### EXAMPLE 1

| GREEN COLOR INK | % |
|---|---|
| Acrylic resin | 29.8 |
| Water | 50.83 |
| Surfactant | 0.8 |
| Pigment | 18.2 |
| Antifoaming agent | 0.355 |
| Biocide | 0.015 |
| | 100 |

### EXAMPLE 2

| CREAM COLOR INK | % |
|---|---|
| Acrylic resin | 17.5 |
| Polyurethane resin | 13 |
| Water | 43.5 |
| Surfactant | 0.5 |
| Pigment | 25.082 |
| Antifoaming agent | 0.4 |
| Biocide | 0.018 |

### EXAMPLE 3 (invention)

| BLACK COLOR INK | % |
|---|---|
| Acrylic resin | 30.1 |
| Water | 48.38 |
| Surfactant | 1.2 |
| Pigment | 14.35 |
| Antifoaming agent | 0.55 |
| Organic solvents | 5.4 |
| Biocide | 0.02 |
| | 100 |

### EXAMPLE 4

| LIGHT BLUE COLOR INK | % |
|---|---|
| Acrylic resin | 38.1 |
| Water | 54.988 |
| Surfactant | 2.1 |
| Pigment | 3.9 |
| Antifoaming agent | 0.1 |
| Polyethylene wax | 0.8 |
| Biocide | 0.012 |
| | 100 |

Percentages are given by weight with respect to the total.

The present invention patent describes a new flexographic printing ink. The examples mentioned herein are not limiting of the present invention, as a result of which said invention may have different applications and/or adaptations, all of which are within the scope of the following claims.

## Claims

1. A flexographic printing ink, **characterized in that** it comprises:
- between 1% and 40% by weight of pigments with respect to the total,
- between 11.5% and 39% by weight of acrylic resins with respect to the total,
- between 32% and 52% by weight of water with respect to the total,
- between 0.01% and 0.025% by weight of biocides with respect to the total,
- between 0.5% and 10% by weight of surfactant with respect to the total,
- between 0.1% and 1% by weight of antifoaming agent with respect to the total, and
- between 1% and 8% by weight of organic solvents with respect to the total, wherein the organic solvent is a water-miscible solvent selected from monohydric C1-C4 alcohols and glycol ethers.

2. The ink according to claim 1, **characterized in that** it comprises between 1% and 15% by weight of polyurethane resins with respect to the total.

3. The ink according to claim 1, **characterized in that** it comprises between 0.1% and 3% by weight of polyethylene wax with respect to the total.

4. The ink according to any one of claims 1 to 3, wherein the water-miscible organic solvent is ethanol or isopropanol.

5. The ink according to any one of claims 1 to 4, wherein the surfactant is polyalkylene oxide adduct of an alcohol or a diol ethoxylate.

## Patentansprüche

1. Flexodruckfarbe, **dadurch gekennzeichnet, dass** sie umfasst:
- zwischen 1 und 40 Gew.-% Pigmente, bezogen auf die Gesamtmenge,
- zwischen 11,5 und 39 Gew.-% Acrylharze, bezogen auf die Gesamtmenge,
- zwischen 32 und 52 Gew.-% Wasser, bezogen auf die Gesamtmenge,
- zwischen 0,01 und 0,025 Gew.-% Biozide, bezogen auf die Gesamtmenge,
- zwischen 0,5 und 10 Gew.-% Tensid, bezogen auf die Gesamtmenge,
- zwischen 0,1 und 1 Gew.-% Antischaummittel, bezogen auf die Gesamtmenge,
- zwischen 1 und 8 Gew.-% organische Lösungsmittel, bezogen auf die Gesamtmenge,
wobei das organische Lösungsmittel ein wassermischbares Lösungsmittel ausgewählt aus einwertigen C1-C4-Alkoholen und Glycolethern ist.

2. Farbe gemäß Anspruch 1, **dadurch gekennzeichnet, dass** sie zwischen 1 und 15 Gew.-% Polyurethanharze, bezogen auf die Gesamtmenge, umfasst.

3. Farbe gemäß Anspruch 1, **dadurch gekennzeichnet, dass** sie zwischen 0,1 und 3 Gew.-% Polyethylenwachs, bezogen auf die Gesamtmenge, umfasst.

4. Farbe gemäß einem der Ansprüche 1 bis 3, wobei das wassermischbare organische Lösungsmittel Ethanol oder Isopropanol ist.

5. Farbe gemäß einem der Ansprüche 1 bis 4, wobei das Tensid ein Polyalkylenoxid-Addukt eines Alkohols oder ein Diolethoxylat ist.

## Revendications

1. Encre d'impression flexographique, **caractérisée en ce qu'**elle comprend :
- entre 1 et 40 % en poids de pigments par rapport au total,
- entre 11,5 et 39 % en poids de résines acryliques par rapport au total,
- entre 32 et 52 % en poids d'eau par rapport au total,
- entre 0,01 et 0,025 % en poids de biocides par rapport au total,
- entre 0,5 et 10 % en poids de tensioactif par rapport au total,
- entre 0,1 et 1 % en poids d'agent antimousse par rapport au total, et
- entre 1 et 8 % en poids de solvants organiques par rapport au total, dans laquelle le solvant organique est un solvant miscible à l'eau choisi parmi les alcools monohydriques en C₁-C₄ et les éthers de glycol.

2. Encre selon la revendication 1, **caractérisée en ce qu'**elle comprend entre 1 et 15 % en poids de résines polyuréthane par rapport au total.

3. Encre selon la revendication 1, **caractérisée en ce qu'**elle comprend entre 0,1 et 3 % en poids de cire de polyéthylène par rapport au total.

4. Encre selon l'une quelconque des revendications 1 à 3, dans laquelle le solvant organique miscible à l'eau est l'éthanol ou l'isopropanol.

5. Encre selon l'une quelconque des revendications 1 à 4, dans laquelle le tensioactif est un adduit d'oxyde de polyalkylène et d'un alcool ou d'un diol éthoxylate.
